# EUROPÄISCHE PATENTANMELDUNG

(11) **EP 0 609 198 A2**
(43) Veröffentlichungstag der Anmeldung: **03.08.1994**
(21) Anmeldenummer: 94890020.4
(22) Anmeldetag: 24.01.1994
(51) Int. Cl.: G01N 27/403, G01N 27/401, G01N 27/28, G01N 27/416

(54) **Elektrodenanordnung**

(30) Priorität: 27.01.1993 AT 139/93
(71) Anmelder: AVL Medical Instruments AG, CH-8207 Schaffhausen (CH)
(72) Erfinder: Ritter, Christoph, Dr., A-8045 Graz (AT); Zach, Helmut, Ing., A-8046 Graz (AT); Steinböck, Wolf-Dietrich, A-8020 Graz (AT); Lang, Susanne, Ing., A-8502 Lannach (AT); Huber, Wolfgang, A-8501 Lieboch (AT)
(74) Vertreter: Krause, Walter, Dr. Dipl.-Ing.

(57) **Zusammenfassung**

Zur Verbesserung einer Elektrodenanordnung mit zumindest einer in einem Probenkanal (1) angeordneten potentiometrischen Meßelektrode (2) und einer in einer Zweigleitung (3) angeordneten Referenzelektrode (4), wobei in Strömungsrichtung nach der diaphragmenfreien Einmündung der Zweigleitung in den Probenkanal eine Saugpumpe (5) vorgesehen ist, wird vorgeschlagen, daß die Referenzelektrode als ionensensitive, vorzugsweise chloridsensitive Membranelektrode ausgeführt ist.

## Beschreibung

Die Erfindung betrifft eine Elektrodenanordnung mit zumindest einer in einem Probenkanal angeordneten Potentiometrischen Meßelektrode und einer in einer Zweigleitung angeordneten Referenzelektrode, wobei in Strömungsrichtung nach der diaphragmenfreien Einmündung der Zweigleitung in den Probenkanal eine Saugpumpe vorgesehen ist.

Beim Einsatz potentiometrischer Meßelektroden besteht grundsätzlich die Notwendigkeit zusätzlich zur potentiometrischen Meßelektrode eine Referenzelektrode zu verwenden. Diese Referenzelektrode hat im wesentlichen die Aufgabe, ein zumindest konstantes, d.h. proben- und zeitunabhängiges Potential zu liefern, sodaß der Meßstromkreis, welcher über die Meßelektrode und die Referenzelektrode verläuft, möglichst nur durch die probenabhängigen Variationen des Potentials an der potentiometrischen Meßelektrode beeinflußt wird. In jenen Fällen, wo die Potentiometrische Meßelektrode nicht direkt in die Probe taucht, sondern z.B. durch eine flüssigkeitspermeable Membran von der Probe getrennt ist, kann in der Regel relativ einfach eine Referenzelektrode hergestellt werden, da diese dann auch nicht direkt mit der Probe in Kontakt stehen muß. In solchen Fällen können z.B. Silber-Silberchlorid-Elekroden verwendet werden. Relativ einfach ist die Verwendung von Referenzelektroden auch in jenen Fällen, wo die Proben mit einer definierten Lösung stark verdünnt werden können. Der Verdünnungslösung kann in der Regel ein Leitsalz zugesetzt werden, welches dann in immer gleichbleibender Konzentration vorliegt. Die Messung eines der im Leitsalz vorhandenen Ionen durch eine entsprechend selektive potentiometrische Elektrode kann dann als Referenzelektrodenpotential dienen.

Bedeutend schwieriger ist es, Referenzelektroden für die Messung in unverdünnten Proben zu entwickeln, da es hierbei praktisch unmöglich ist, die Forderung nach einem immer gleichbleibenden Potential an der Referenzelektrode streng zu erfüllen. Man versucht dieser Forderung möglichst nachzukommen, indem man die Referenzelektrode zweiteilig aufbaut: Einerseits wird eine möglichst stabile Ableitelektrode verwendet (in der Regel Kalomelelektroden oder eventuell auch Silber-Silberchlorid-Elektroden). Diese Ableitelektrode steht in Kontakt mit einer Flüssigkeit, welche wiederum den Kontakt zur zu messenden Probe herstellt und sich dadurch auszeichnet, daß sie aus sehr hohen Salzkonzentrationen eines Salzes besteht, in welchen Anionen und Kationen möglichst identische Beweglichkeiten aufweisen. Durch die identischen Beweglichkeiten der Anionen und Kationen wird erreicht, daß der Potentialaufbau an der Grenzfläche dieser Flüssigkeit zur Probe möglichst klein ist. Durch die hohen Konzentrationen wird erreicht, daß Konzentrationsschwankungen in der Probe wenig Rolle spielen. Eine für diese Zwecke besonders beliebte Flüssigkeit ist konzentrierte Kaliumchloridlösung (KCl). Benötigt man Referenzelektroden für längerfristige Anwendungen, so ist als Ableitelektrode die Silber-Silberchlorid-Elektrode in der Regel nicht geeignet, da die längerfristige Stabilität der Elektrode nicht gewährleistet ist. Es wird daher in der Regel eine Kalomelelektrode verwendet.

Derartige Referenzelektroden bestehend aus konzentrierten Salzlösungen ähnlicher Beweglichkeit, sowie aus einer Kalomel-eleketrode haben sich seit vielen Jahren bewährt. In der Praxis treten jedoch einige Probleme auf:
a) Die als Diaphragma ausgeführte Verbindung Referenzelektrolyt (KC1) Probe ist eine kritische Zone, da es hier leicht zu Verstopfungen, Verlegungen, etc. kommt, was zu Meßfehlern führen kann.
b) Die Kalomelelektrode ist in der Fertigung und Handhabung relativ kritsch, da die Materialien (Quecksilber, Kalomel und Watte) gefühlvoll eingebracht werden müssen und beim Transport bzw. bei der Verwendung nicht zu großen Erschütterungen ausgesetzt sein dürfen.
c) Ein weiterer Aspekt ist das wachsende Umweltbewußtsein, welches eine zunehmend kritische Haltung gegenüber der Verwendung von Quecksilber erzeugt.
d) Um die Kalomelelektrode jederzeit einsatzbereit zu haben ist eine Lagerung der Elektrode in einer Flüssigkeit, welche derjenigen entspricht, in der sie eingesetzt werden soll, notwendig (konzentriertes KCl).

Aufgabe der Erfindung ist es nun, eine Elektrodenanordnung vorzuschlagen, welche einfach aufgebaut ist und welche sowohl bei Lagerung, Transport und im Einsatz einfach zu handhaben ist, und welche ferner sicherstellt, daß es an der Verbindung Referenzelektrolyt/Probe zu keinen Verstopfungen oder Verlegungen kommt, wodurch das Meßergebnis verfälscht werden könnte.

Diese Aufgabe wird erfindungsgemäß dadurch gelöst, daß die Referenzelektrode als ionensensitive, vorzugsweise chloridsensitive Membranelektrode ausgeführt ist. Während eine Kalomelelektrode in ihrem Aufbau im wesentlichen definiert und grundsätzlich kaum veränderbar ist und einer Miniaturisierung Grenzen entgegensetzt, weist eine ionenselektive Membranelektrode einen völlig unkomplizierten Aufbau auf, wobei als zusätzliche Vorteile die trockene Lagerung, die Langlebigkeit und die Möglichkeiten zur Miniaturisierung aufgezeigt werden sollen. Die sensitive Membran besteht im wesentlichen aus einer Mischung aus Polyvinylchlorid (PVC) und Ionentauscher. Beispeilsweise kann die erfindungsgemäße Referenzelektrode mit einer aus der AT-PS 380 741 bekannten chloridsensitiven Membran beschichtet sein.

Bei ionensensitiven PVC-Membranen ist es im allgemeinen notwendig, auf der probenabgewandten Seite der Membran eine Flüssigkontaktierung zum Ableitdraht herzustellen, um ein möglichst stabiles Potential zu erreichen (Übergang vom Ionenleiter zum Elektronenleiter). Eine chloridsensitive Membran bietet jedoch den Vorteil diese direkt mit einem Silber-Silberchlorid-Draht zu kontaktieren ohne eine dazwischenliegende Flüssigkeit verwenden zu müssen. Dies vereinfacht die Konstruktion einer derartigen Elektrode erheblich. Die Ursache dafür ist darin zu finden, daß es an allen Phasenübergängen elektrochemisch definierte Übergangsbedingungen gibt (die Chloridmembran steht im Gleichgewicht mit der Silber-Silberchlorid-Schicht, die Silber-Silberchlorid-Schicht steht im Gleichgewicht mit dem Silberdraht). Da Membranen auf PVC-Ionentauscherbasis bei Meßbeginn kaum Driften zeigen, ist es für derartige Elektroden im Gegensatz zu Kalomelelektroden nicht notwendig, sie in Kontakt mit dem Elektrolyten zu verpacken.

In einer Weiterbildung der Erfindung ist vorgesehen, daß in der Zweigleitung und im Probenkanal jeweils ein Ventil angeordnet ist, welche Ventile zusammen mit der Saugpumpe mit einer Steuereinrichtung verbunden sind. Insbesondere können die Ventile jeweils in Strömungsrichtung vor der Referenzelektrode und der Meßelektrode angeordnet sein.

Wie zum Stand der Technik erwähnt, werden in der Regel Diaphragmen eingesetzt um den KCl-Verbrauch klein zu halten. Diese neigen jedoch stark zu Verstopfungen. Es wird daher vorgeschlagen die Verbindung zwischen Probe und Referenzelektrolyt durch ein einfaches T-Stück zu ersetzten, wobei durch entsprechende Steuerung einer Saugpumpe und von zwei Ventilen erreicht wird, daß nach Einsaugen der Probe in den Probenkanal und Stillstand der Probe noch eine kleine Menge Elektrolyt (KCl) eingesaugt wird, um sicher zu stellen, daß an der Verbindungsstelle Probe Referenzelektrolyt bei jeder Messung ein frischer Referenzelektrolyt vorliegt. Der Druchmesser dieser Verbindung kann einige zehntel Millimeter betragen.

In der beschriebenen Elektrodenanordnung kommt somit eine langlebige, wartungsfreie und trocken lagerbare Referenzelektrode zur Anwendung, welche z.B. für Messungen in biologischen Proben bestens geeignet ist.

Die Erfindung wird im folgenden anhand von schematischen Zeichnungen näher erläutert. Es zeigen:
- Fig. 1 und Fig. 2: Elektrodenanordnungen nach dem Stand der Technik und
- Fig. 3: eine erfindungsgemäße Elektrodenanordnung.

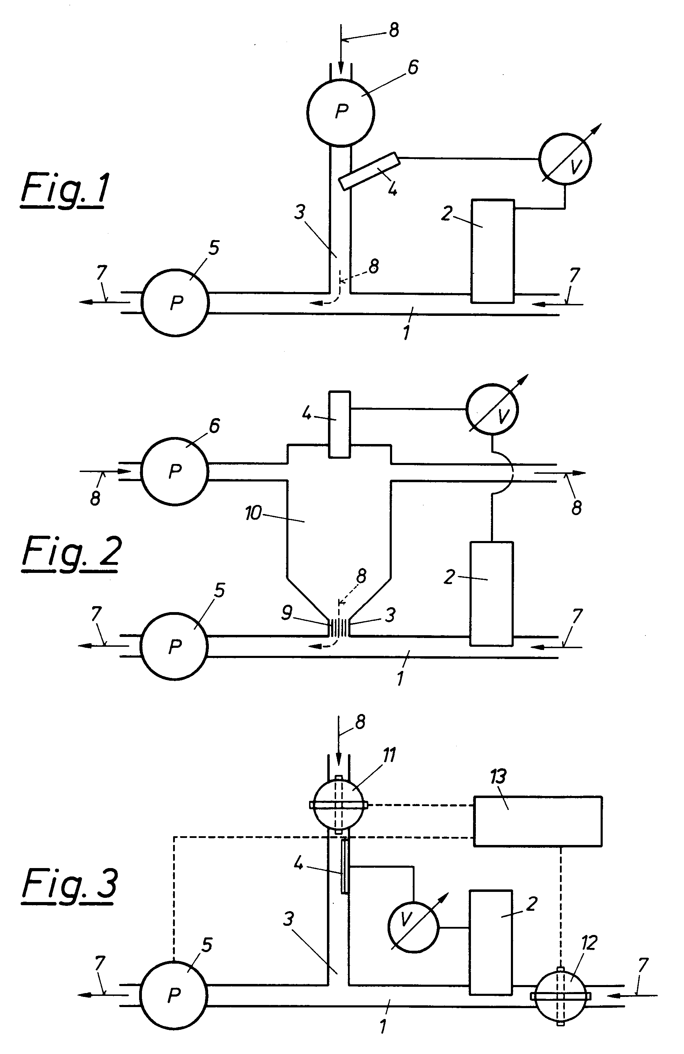

Bei der bekannten Elektrodenanordnung nach Fig. 1 ist in einem Probenkanal 1 eine potentiometrische Meßelektrode 2 angeordnet. In einer T-förmig vom Probenkanal 1 wegführenden Zweigleitung 3 ist eine Kalomelelektrode als Referenzelektrode 4 vorgesehen, über welche der Meßstromkreis zur Meßelektrode geschlossen wird. Für den Probentransport ist eine Saugpumpe 5 und für die Versorgung der Kalomelelektrode mit KCl eine Pumpe 6 vorgesehen. Die Richtung des Probentransportes ist durch Pfeile 7, jene des Elektroyttransportes durch Pfeil 8 angedeutet.

Weiters sind gemäß Fig. 2 Elektrodenanordnungen bekannt, bei welchen die Verbindung Probe zu Referenzelektrolyt durch ein Diaphragma 9 oder eine Kapillare hergestellt wird, um den KCl-Verbrauch gering zu halten. Das Eindringen der Probe in den die Kalomelelektrode 4 und den Elektrolyten aufnehmenden Behälter 10 wird durch einen geringen, von der Pumpe 6 erzeugten Überdruck verhindert.

Die in Fig. 3 dargestellt erfindungsgemäße Elektrodenanordnung - bei welcher den Ausführungsvarianten nach dem Stand der Technik entsprechende Teile mit gleichen Bezugszeichen versehen wurden - weist in der Zweigleitung 3 eine als ionensensitive Membranelektrode ausgeführte Referenzelektrode 4 auf, wobei am Übergang von der Zweigleitung 3 zum Probenkanal 1 eine diaphragmenfreie Öffnung mit einem Druchmesser > 0.2 mm besteht. Die Anordnung nach Fig. 3 findet mit nur einer Saugpumpe 5 das Auslangen, da zur Steuerung des Proben- und des Referenzmittelflusses in der Zweigleitung 3 und im Probenkanal 1 je ein Ventil 11 bzw. 12 angeordnet ist, welche zusammen mit der Saugpumpe 5 an eine Steuereinrichtung 13 angeschlossen sind.

## Patentansprüche

1. Elektrodenanordnung mit zumindest einer in einem Probenkanal (1) angeordneten potentiometrischen Meßelektrode (2) und einer in einer Zweigleitung (3) angeordneten Referenzelektrode (4), wobei in Strömungsrichtung nach der diaphragmenfreien Einmündung der Zweigleitung (3) in den Probenkanal (1) eine Saugpumpe (5) vorgesehen ist, **dadurch** **gekennzeichnet****,** daß die Referenzelektrode (4) als ionensensitive, vorzugsweise chloridsensitive Membranelektrode ausgeführt ist.

2. Elektrodenanordnung nach Anspruch 1, **dadurch gekennzeichnet,** daß die chloridsensitive Membran der Membranelektrode direkt mit einem Silber-Silberchlorid-Draht kontaktiert ist.

3. Elektrodenanordnung nach Anspruch 1 oder 2, **dadurch gekennzeichnet,** daß in der Zweigleitung (3) und im Probenkanal 1 jeweils ein Ventil (11, 12) angeordnet ist, welche Ventile (11, 12) zusammen mit der Saugpumpe (5) mit einer Steuereinrichtung (13) verbunden sind.

4. Elektrodenanordnung nach Anspruch 3, **dadurch gekennzeichnet,** daß die Ventile (11, 12) jeweils in Strömungsrichtung vor der Referenzelektrode (4) und der Meßelektrode (2) angeordnet sind.
